# EUROPÄISCHE PATENTSCHRIFT

(11) **EP 3 140 560 B1**
(45) Veröffentlichungstag und Bekanntmachung des Hinweises auf die Patenterteilung: **28.03.2018**
(21) Anmeldenummer: 15728390.4
(22) Anmeldetag: 14.04.2015
(51) Int. Cl.: F16D 21/06, F16D 25/10, F16D 25/0638, F16D 25/08

(54) **VERSTEIFUNGSHÜLSE FÜR EINEN ZENTRALEN DOPPELBETÄTIGUNGSZYLINDER EINER DOPPELKUPPLUNG**
REINFORCING SLEEVE FOR A CENTRAL DOUBLE ACTUATING CYLINDER OF A DOUBLE CLUTCH
MANCHON DE RENFORT POUR UN CYLINDRE DE COMMANDE DOUBLE CENTRAL D'UN EMBRAYAGE DOUBLE

(30) Priorität: 07.05.2014 DE 102014208554
(43) Veröffentlichungstag der Anmeldung: 15.03.2017
(73) Patentinhaber: Schaeffler Technologies AG & Co. KG, 91074 Herzogenaurach (DE)
(72) Erfinder: CLAUSS, Mathieu, 67610 La Wantzenau (FR); LÖRCH, Herbert, 76547 Sinzheim (DE)
(86) Internationale Anmeldenummer: PCT/DE2015/200256
(87) Internationale Veröffentlichungsnummer: WO 2015/169305

(56) Entgegenhaltungen:
- DE-A1-102009 053 488
- DE-A1-102011 107 696
- DE-A1-102012 212 309
- DE-A1-102013 218 112

## Beschreibung

Die Erfindung betrifft eine Versteifungshülse für einen zentralen Doppelbetätigungszylinder einer Doppelkupplung, sowie einen zentralen Doppelbetätigungszylinder und eine Doppelkupplung, insbesondere für ein Kraftfahrzeug.

Aus dem Stand der Technik sind verschiedene zentrale Doppelbetätigungszylinder ("CSC" - Central Slave Cylinder) für eine Doppelkupplung bekannt, bei denen zwei Kolben in einer jeweiligen Druckkammer vorgesehen sind, mit denen die zwei Reibpakete der Doppelkupplung separat schaltbar sind. So offenbart die Druckschrift DE 10 2012 212 309 A1 beispielsweise ein Ausrücksystem zur Betätigung einer Kupplung mit einem ersten und einem zweiten Kolben, die jeweils in einem ersten und einem zweiten Druckraum axial verschieblich gelagert sind. Aufgrund der bei einem Doppelbetätigungszylinder vorliegenden hohen Druckkräfte werden solche Doppelbetätigungszylinder bisher aus einem Metall, bevorzugt Aluminium, gefertigt. Damit sind hohe Materialkosten und Fertigungskosten verbunden.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft eine Versteifungshülse für einen zentralen Doppelbetätigungszylinder einer Doppelkupplung, welcher zumindest die folgenden Komponenten aufweist:
- einen Versteifungsmantel für einen zentralen Doppelbetätigungszylinder, wobei der Doppelbetätigungszylinder eine außenliegende Druckkammer, eine innenliegende Druckkammer und eine Kolbenöffnungsseite umfasst; und
- einen Positionierrand, der dazu eingerichtet ist, im montierten Zustand eine vorbestimmte Solllage der Versteifungshülse relativ zum Doppelbetätigungszylinder sicherzustellen,
wobei der aufgeführte Versteifungsmantel dazu eingerichtet ist, eine außenliegende Druckkammer eines Doppelbetätigungszylinders umfänglich und radial nach außen zu stützen.

Die Versteifungshülse ist dazu vorgesehen, einen zentralen Doppelbetätigungszylinder umfänglich und radial nach außen zu stützen. Damit ist es möglich, den Doppelbetätigungszylinder weicher auszugestalten, und zum Beispiel aus einem Kunststoff zu fertigen. Dadurch werden die Fertigungskosten für den Doppelbetätigungszylinder, der zum Beispiel als Spritzgussbauteil hergestellt werden kann, deutlich reduziert. Der zentrale Doppelbetätigungszylinder umfasst eine innenliegende Druckkammer und eine außenliegende Druckkammer, in der mit einer hydraulischen Flüssigkeit oder mit einem pneumatischen Gas ein äußerer Kolben beziehungsweise ein innerer Kolben zum Betätigen der zwei Reibpakete einer Doppelkupplung antreibbar sind. Der zentrale Doppelbetätigungszylinder umschließt dabei eine Welle der Doppelkupplung, bevorzugt zwei konzentrischen Getriebewellen der Doppelkupplung. Der innere Kolben und der äußere Kolben sind bevorzugt als konzentrische Ringelemente aufgebaut, die in entsprechenden Druckkammern geführt werden.

Die Drücke, die zur Betätigung der Doppelkupplung notwendig sind, müssen in der Druckkammer aufgenommen werden und können bei einem weichen Material zu einer Aufweitung der Druckkammer führen. Dadurch wird eine Volumenzunahme bewirkt, die entsprechend über einen Geberzylinder über einen verlängerten Stellweg ausgeglichen werden muss. Eine solche Aufweitung der Druckkammern wird mit Hilfe des Versteifungsmantels der Versteifungshülse unterbunden. Die Versteifungshülse liegt nach dem Aufführen an der Außenwand der außenliegenden Druckkammer an, und verhindert somit eine Aufweitung der außenliegenden Druckkammer radial nach außen.

Um zu verhindern, dass sich das Material der Druckkammern durch Reibung mit dem Versteifungsmantel plastifiziert und somit langfristig zu einer Volumenausdehnung der Druckkammer führt, ist es wichtig, ein geringes Übermaß, also zwischen dem Doppelbetätigungszylinder und der Versteifungshülse ein Spiel, einzustellen. Die Dimensionierung des Spiels ist an die Gehäusewerkstoffeigenschaften anzupassen, insbesondere unter Berücksichtigung der bestimmungsgemäßen Betriebstemperatur und den Werkstoffeigenschaften des Doppelbetätigungszylinders, um eine Plastifizierung durch thermischen Dehnungen zu verhindern.

Die hier vorgeschlagene Versteifungshülse ist zudem besonders leicht zu montieren, indem sie einen Positionierrand aufweist, der einen Anschlag mit dem zentralen Doppelbetätigungszylinder bildet, so dass eine vorbestimmte Solllage der Versteifungshülse relativ zum Doppelbetätigungszylinder leicht sicherstellbar ist und so die Montage erleichtert. Die Versteifungshülse ist dabei auf den Doppelbetätigungszylinder aufführbar, sodass der Doppelbetätigungszylinder von dem Versteifungsmantel umfänglich umgeben ist. Die Versteifungshülse ist dabei so weit auf den Doppelbetätigungszylinder aufführbar, bis der Positionierrand mit dem Doppelbetätigungszylinder an einer entsprechend eingerichteten Gegenanlage in Kontakt kommt. Zusätzlich ist des vorteilhaft, an der Versteifungshülse einen Verbindungsrand vorzusehen, welcher zum Beispiel durch plastische Verformung in eine entsprechende Vertiefung im Doppelbetätigungszylinder eingebracht wird und so mit dem Doppelbetätigungszylinder sicher verbindbar ist.

Gemäß einer weiteren vorteilhaften Ausführungsform der Versteifungshülse ist die Versteifungshülse von der Kolbenöffnungsseite auf den Doppelbetätigungszylinder aufführbar.

Bei dieser bevorzugten Ausführungsform ist die Versteifungshülse kolbenseitig aufführbar. Bei dieser Konfiguration wird die Versteifungshülse besonders kurz gestaltbar, weil sie sich lediglich von der Kolbenöffnungsseite bis (in etwa) zum gegenüberliegenden Zylindergrund oder sogar nur etwa eine Zylinderwandstärke davor erstrecken muss. In einem anderen Aspekt kann der Doppelbetätigungszylinder besonders kurz gestaltet werden, weil die rückseitig angeordneten Versorgungsanschlüsse zum Beispiel seitlich zugeführt werden können, das heißt der rückseitige Durchmesser kann größer gewählt werden als ein entsprechender Innendurchmesser der Versteifungshülse.

Gemäß einer weiteren vorteilhaften Ausführungsform der Versteifungshülse weist der Versteifungsmantel eine Mantellänge auf, die mindestens einer Kammerlänge der außenliegenden Druckkammer entspricht.

Bei dieser vorteilhaften Ausführungsform der Versteifungshülse überdeckt der Versteifungsmantel von dem Positionierrand bei der Kolbenöffnungsseite bis zu einer Hinterwand der außenliegenden Druckkammer die gesamte Kammerlänge vollständig beziehungsweise überragt die Kammerlänge. Hierdurch wird eine Aufweitung über den gesamten Bereich der außenliegenden Druckkammer unterbunden. Es sei dabei darauf hingewiesen, dass der Versteifungsmantel lediglich bevorzugt ein durchgehendes und geschlossenes umfängliches Blech bildet. Er kann aber auch Eröffnungen aufweisen. Diese Eröffnungen sind dann auf eine Steifigkeit des Materials des Doppelbetätigungszylinders abgestimmt. Beispielsweise kann der Versteifungsmantel auch als (gewobenes, gestanztes oder ungeordnetes) Netz ausgebildet sein.

Gemäß einer weiteren vorteilhaften Ausführungsform der Versteifungshülse ist eine elastische Verbindungseinrichtung vorgesehen, welche die montierte Versteifungshülse in der Solllage arretiert.

Bei dieser bevorzugten Ausführungsform weist die Versteifungshülse eine elastische Verbindungseinrichtung auf, welche vorteilhafterweise auf der dem Positionierrand gegenüberliegenden Seite des Versteifungsmantels angeordnet ist. Beispielsweise ist eine solche elastische Verbindungseinrichtung als ein nach innen gerichteter Kragen ausgebildet, welcher beim Aufschieben der Versteifungshülse auf den Doppelbetätigungszylinder ausgelenkt wird und beim Erreichen einer entsprechenden Vertiefung am Doppelbetätigungszylinder in die Vertiefung einrastet und somit die Versteifungshülse in der Solllage arretiert. Somit wird die Montage sicherer und einfacher. Besonders bevorzugt weist die elastische Verbindungseinrichtung eingangsseitig eine Aufschubaufweitung auf, die eine Montage weiter erleichtert.

Gemäß einer weiteren vorteilhaften Ausführungsform der Versteifungshülse weist der Versteifungsmantel eine Außenoberfläche auf, die zur Aufnahme einer rotatorischen Lagerung eingerichtet ist.

Eine solche Außenoberfläche kennzeichnet sich vor allem durch eine geeignete Rauigkeit für die Aufnahme einer rotatorischen Lagerung, zum Beispiel eines Wälzkörperlagers (bevorzugt ein Schrägkugellager) für einen rotierenden Kupplungsdeckel der Doppelkupplung. Somit kann die Oberflächenbeschaffenheit des Doppelbetätigungszylinders allein auf die Versteifungshülse eingerichtet werden, wodurch die Fertigung des Doppelbetätigungszylinders vereinfacht wird. Zudem kann der Versteifungsmantel eine ausreichend steife Oberfläche ausbilden, die für eine Aufnahme einer rotatorischen Lagerung geeignet ist.

Gemäß einer weiteren vorteilhaften Ausführungsform weist die Versteifungshülse zudem beim Positionierrand einen Lagerflansch für eine rotatorische Lagerung auf, sodass die rotatorische Lagerung zumindest einseitig axial fixiert ist. Somit kann ein zusätzliches Bauteil zur axialen Fixierung der rotatorischen Lagerung eingespart werden. Gemäß einer alternativen Ausführungsform der Versteifungshülse bildet der Versteifungsmantel selbst eine Außenoberfläche, die für eine hydrodynamische Schmierlagerung geeignet ist.

Gemäß einem weiteren Aspekt der Erfindung wird ein Doppelbetätigungszylinder für eine Doppelkupplung vorgeschlagen, welcher zumindest die folgenden Komponenten aufweist:
- eine außenliegende Druckkammer und eine innenliegende Druckkammer mit jeweils einer Kolbenöffnung;
- eine Versteifungshülse nach einem der vorhergehenden Ansprüche,
wobei zumindest die Druckkammern aus einem Kunststoff gefertigt sind und die aufgeführte Versteifungshülse die Steifigkeit der Druckkammern, umfänglich und radial nach außen zumindest mittelbar erhöht.

Bei dem hier vorgeschlagenen Doppelbetätigungszylinder sind die Druckkammern (beide) erstmals beziehungsweise der gesamte Doppelbetätigungszylinderkörper aus Kunststoff fertigbar. Somit ist ein solcher Doppelbetätigungszylinder besonders kostengünstig fertigbar, insbesondere für die Großserienfertigung.

Gemäß einem weiteren Aspekt der Erfindung wird eine Doppelkupplung mit einer Rotationsachse zum lösbaren Verbinden einer Abtriebswelle mit einem Antriebsstrang vorgeschlagen, welche zumindest die folgenden Komponenten aufweist:
- zwei Reibpakete, aufweisend jeweils eine Anpressplatte und zumindest eine korrespondierenden Reibscheibe, über die im angepressten Zustand ein Drehmoment übertragbar ist;
- einen Doppelbetätigungszylinder mit einem äußeren Kolben in der außenliegenden Druckkammer und einem inneren Kolben in der innenliegenden Druckkammer, und mit einer Versteifungshülse gemäß obiger Beschreibung, wobei der Doppelbetätigungszylinder dazu eingerichtet ist, mit dem äußeren Kolben der außenliegenden Druckkammer ein erstes Reibpaket zu betätigen und mit dem inneren Kolben der innenliegenden Druckkammer ein zweites Reibpaket zu betätigen.

Die Doppelkupplung ist dazu eingerichtet, ein Drehmoment lösbar von einer Abtriebswelle auf einen Antriebsstrang und umgekehrt zu übertragen. Dies wird in der Regel über jeweils ein Reibpaket erreicht, welches eine axial verschiebbare, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Eine Doppelkupplung wird in der Regel mit einem Doppelgetriebe verbunden, bei dem die verschiedenen Übersetzungsgänge abwechselnd in separaten Strängen aufgeteilt sind. Die zwei Getriebewellen zwischen der Doppelkupplung und dem Doppelgetriebe werden also jeweils mit den ungeraden und den geraden Gängen verbunden. Die Doppelkupplung ist dabei derart eingerichtet, dass eine (nahezu) lückenlose Momentenübertragung stattfinden kann. Bei Wechsel von einem Gang in den nachfolgenden Gang wird dann das eine Reibpaket gelöst, während bereits das andere Reibpaket eingerückt wird. Die übertragene Leistung bleibt dabei (nahezu) konstant.

Aufgrund des zusätzlichen Reibpakets, und der separaten Stränge des Doppelgetriebes ist die Bauraumforderung gegenüber einer Einfachkupplung deutlich erhöht. Die Bauraumforderung wird bei den zunehmend hohen geforderten Drehmomenten der Antriebseinheiten verstärkt. Um eine übermäßige Vergrößerung der Reibflächen zu vermeiden, wird daher eine Erhöhung der Anpresskräfte erforderlich. Um dies zu erreichen mussten bisher metallische Doppelbetätigungszylinder eingesetzt werden, die jedoch teuer in der Fertigung sind. Mit dem hier vorgeschlagenen Doppelbetätigungszylinder können zum einen die hohen erforderlichen Drücke erreicht werden, zugleich ist der Doppelbetätigungszylinderkörper sogar im Druckbereich der Druckkammern aus einem Kunststoff fertigbar. Somit kann der Doppelbetätigungszylinder zum Beispiel durch das für die Serienfertigung kostengünstige Spritzgießen gefertigt werden.

Gemäß einem weiteren Aspekt der Erfindung wird auch ein Kraftfahrzeug vorgeschlagen, welches eine Antriebseinheit mit einer Abtriebswelle, einen Antriebsstrang und eine Doppelkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Doppelkupplung kann kostengünstig gefertigt werden und zugleich bei geringer Bauraumforderung die hohen Drücke zum Übertragen der geforderten Drehmomente erzeugen.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
Fig. 1: einen konventionellen zentralen Doppelbetätigungszylinder,
Fig. 2: einen Doppelbetätigungszylinder mit Versteifungshülse im Schnitt,
Fig. 3: einen Doppelbetätigungszylinder mit Versteifungshülse in isometrischer Ansicht,
Fig. 4: einen Doppelbetätigungszylinder mit Versteifungshülse im Schnitt mit einem alternativen Verbindungselement,
Fig. 5: eine Doppelkupplung mit Doppelbetätigungszylinder,
Fig. 6: ein Kraftfahrzeug mit Doppelkupplung.

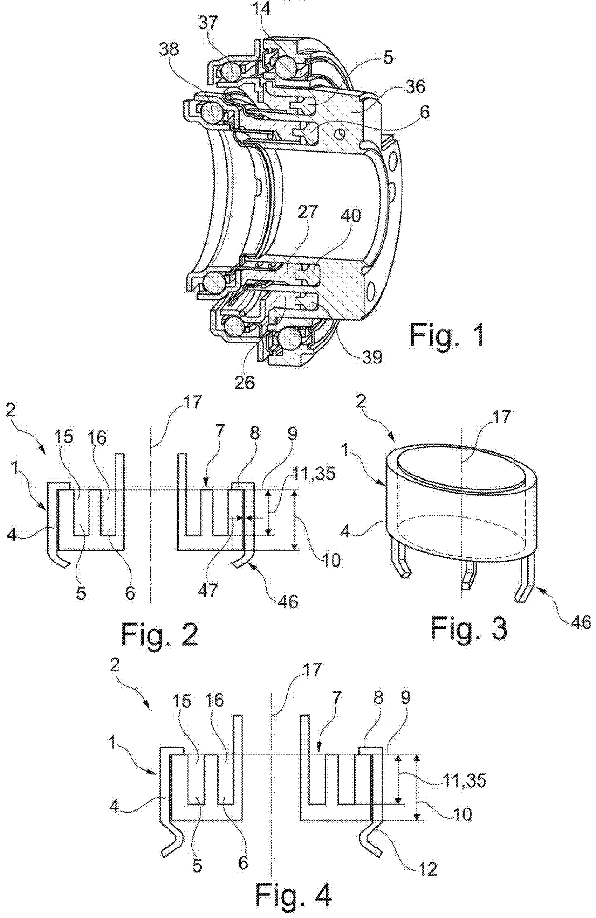

Fig. 1 zeigt einen konventionellen zentralen Doppelbetätigungszylinder 36, welcher hier beispielsweise aus Aluminium gefertigt ist. Der konventionelle zentrale Doppelbetätigungszylinder 36 ist im Wesentlichen genauso aufgebaut wie der hier vorgeschlagene zentrale Doppelbetätigungszylinder 2 (vergleiche Fig. 2 bis 5). Der konventionelle Doppelbetätigungszylinder 36 weist eine außenliegende Druckkammer 5 und einen innenliegende Druckkammer 6 auf, in der ein äußerer Kolben 26 beziehungsweise ein innerer Kolben 27 mit jeweils einer ersten inneren Kolbendichtung 39 beziehungsweise einer zweiten Kolbendichtung 40 versehen sind. Mit dem äußeren Kolben 26 wird eine Einrückkraft auf eine erste Reibpaketlagerung 37 übertragen, sodass mit Hilfe einer Betätigungseinrichtung ein erstes Reibpaket (beides hier nicht dargestellt) verpresst wird. Mit dem innenliegenden inneren Kolben 27 wird eine zweite Reibpaketlagerung 38 in gleicher Weise betätigt. Der konventionelle zentrale Doppelbetätigungszylinder 36 weist zudem eine rotatorische Lagerung 14 auf, mit der ein rotierender Kupplungsdeckel (hier nicht dargestellt) rotatorisch auf dem konventionellen zentralen Doppelbetätigungszylinder 36 lagerbar ist.

In Fig. 2 ist ein zentraler Doppelbetätigungszylinder 2 dargestellt, welcher eine Versteifungshülse 1 aufweist. Der zentrale Doppelbetätigungszylinder 2 ist hier vorteilhafterweise aus einem relativ weichen Material, bevorzugt Kunststoff, gefertigt, wobei die Steifigkeit bei einem üblichen Druck unzureichend ist und zu einer Volumenzunahme der Druckkammer(n) führen würde. Die verringerte Steifigkeit des Materials des Doppelbetätigungszylinders 2 wird durch die Versteifungshülse 1 beziehungsweise deren Versteifungsmantel 4 ausgeglichen.

Es befinden sich in diesem Ausführungsbeispiel eine innenliegende Druckkammer 6 und eine außenliegende Druckkammer 5 konzentrisch um eine Rotationsachse 17 angeordnet innerhalb der Versteifungshülse 1. Die Versteifungshülse 1 ist von der Kolbenöffnungsseite 7 aufgeführt, wohin sich die außenliegende Druckkammer 5 und die innenliegende Druckkammer 6 mit ihrer außenliegenden Kolbenöffnung 15 beziehungsweise ihrer innenliegenden Kolbenöffnung 16 hin eröffnen. Die Versteifungshülse 1 ist mit ihrem Positionierrand 8 in die Solllage gebracht.

Bei dieser Ausführungsform der Versteifungshülse 1 ist die Mantellänge 10 größer als die äußere Kammerlänge 11 und die innere Kammerlänge 35, die in diesem Beispiel gleich lang sind. Aufgrund des vorliegenden Spiels 47 zwischen der Versteifungshülse 1 und dem zentralen Doppelbetätigungszylinder 2 ist die Versteifungshülse 1 leicht auf den zentralen Doppelbetätigungszylinder 2 aufführbar, wobei das Spiel 47 derart gering gewählt ist, dass ein Plastifizieren des Kunststoffs des zentralen Doppelbetätigungszylinders 2 unterbunden ist. Weiterhin weist die Versteifungshülse 1 eine Klammer 46 auf, die beispielsweise durch plastisches Verformen in einer Vertiefung des Doppelbetätigungszylinders 2 oder am Ende des Doppelbetätigungszylinders 2 derart verformt wird, dass die Versteifungshülse 1 axial entlang der Rotationsachse 17 arretiert ist.

In Fig. 3 wird eine isometrische Darstellung einer solchen Versteifungshülse 1 auf einem nur rein schematisch dargestellten zentralen Doppelbetätigungszylinder 2 dargestellt, wobei hier sich drei Füße einer Klammer 46 an den Versteifungsmantel 4 anschließen und so die Versteifungshülse 1 an dem zentralen Doppelbetätigungszylinder axial arretieren.

In Fig. 4 ist eine ähnliche Anordnung wie in Fig. 2 gezeigt, wobei hier eine elastische Verbindungseinrichtung 12 gezeigt ist, die ein Aufschieben der Versteifungshülse 1 auf den zentralen Doppelbetätigungszylinder 2 erleichtern und ein zusätzliches Verformen zum Arretieren der Versteifungshülse 1 in der Solllage 9 relativ zum zentralen Doppelbetätigungszylinder 2 überflüssig macht. Damit wird die Montage der Versteifungshülse 1 deutlich erleichtert.

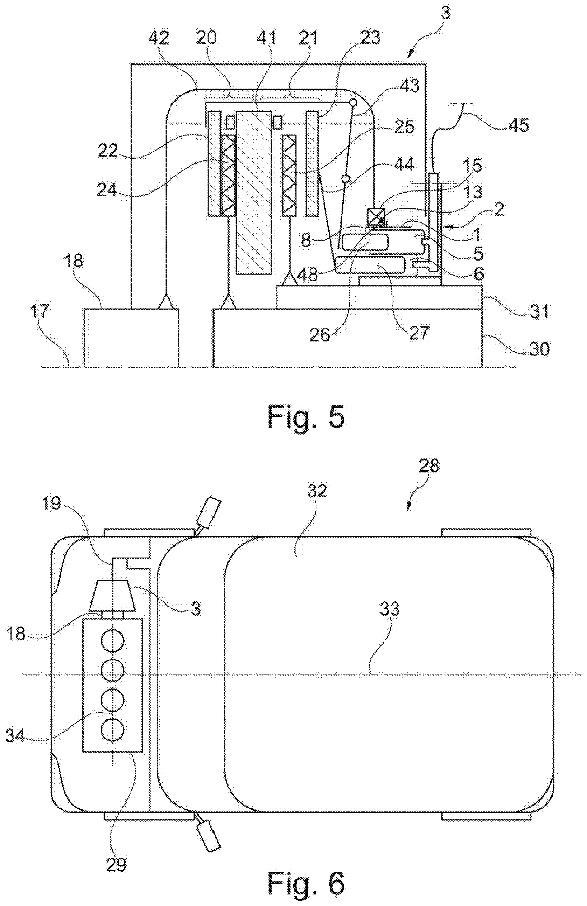

In Fig. 5 ist eine schematische Darstellung einer (normal geöffneten) Doppelkupplung 3 gezeigt, die ein erstes Reibpaket 20 bestehend aus einer ersten Anpressplatte 22 einer ersten Reibscheibe 24 und einen Zentralsteg 41, sowie ein zweites Reibpaket 21 bestehend aus einer zweiten Anpressplatte 23, einer zweiten Reibscheibe 25 und dem Zentralsteg 41 aufweist. In dieser Darstellung ist das erste Reibpaket 20 eingerückt, aufgrund einer Betätigung mittels der ersten Betätigungseinrichtung 43. Beispielsweise umfasst die Betätigungseinrichtung 43 eine Tellerfeder, die mittels des außenliegenden Kolbens 26 in der außenliegenden Druckkammer 5 des Doppelbetätigungszylinders 2 ausgelenkt ist.

Das zweite Reibpaket 21 ist ausgerückt, weil die zweite Betätigungseinrichtung 44 nicht durch den innenliegenden Kolben 27 der innenliegenden Druckkammer 6 des Doppelbetätigungszylinders 2 ausgelenkt ist. Somit wird ein Drehmoment um die Rotationsachse 17 von der Abtriebswelle 18 und dem Kupplungsdeckel 42 mittels des ersten Reibpakets 20 auf die erste Ausgangswelle 30 übertragen und nicht auf die zweite Ausgangswelle 31 übertragen. Die erste Ausgangswelle 30 und die zweite Ausgangswelle 31 sind in der Regel mit einem Doppelgetriebe (hier nicht dargestellt) verbunden. Der hier rein schematisch dargestellte zentrale Doppelbetätigungszylinder 2 weist eine Versteifungshülse 1 auf, die wiederum mit einem Positionierrand 8 auf den Doppelbetätigungszylinder 2 aufgeführt und positioniert ist und darüber hinaus einen Lagerflansch 48 aufweist, über den eine rotatorische Lagerung 15 für den Kupplungsdeckel 42 positioniert gehalten ist. Zum Zweck der Aufnahme der rotatorischen Lagerung 15 weist die Versteifungshülse 1 eine Außenoberfläche 13 auf, die für die Aufnahme der rotatorischen Lagerung 15 eingerichtet ist.

In Fig. 6 ist ein Kraftfahrzeug 28 mit einer Antriebseinheit 29 gezeigt, welche mit ihrer Motorachse 34 quer zur Längsachse 33 vor der Fahrerkabine 32 angeordnet ist. Die Antriebseinheit 29 ist hier als Verbrennungskraftmaschine dargestellt, welche über eine Abtriebswelle 18 mittels einer Doppelkupplung 3 mit einem hier rein schematisch dargestellten Antriebsstrang 19 verbunden ist.

Mit der hier vorgeschlagenen Versteifungshülse ist es möglich, ein kostengünstiges Material für einen Doppelbetätigungszylinder zu verwenden, insbesondere für einen CSC, und ein kostengünstigeres Fertigungsverfahren zu verwenden.

### Bezugszeichenliste

- 1: Versteifungshülse
- 2: zentraler Doppelbetätigungszylinder
- 3: Doppelkupplung
- 4: Versteifungsmantel
- 5: außenliegende Druckkammer
- 6: innenliegende Druckkammer
- 7: Kolbenöffnungsseite
- 8: Positionierrand
- 9: Solllage
- 10: Mantellänge
- 11: äußere Kammerlänge
- 12: Verbindungseinrichtung
- 13: Außenoberfläche
- 14: rotatorische Lagerung
- 15: außenliegende Kolbenöffnung
- 16: innenliegende Kolbenöffnung
- 17: Rotationsachse
- 18: Abtriebswelle
- 19: Antriebsstrang
- 20: erstes Reibpaket
- 21: zweites Reibpaket
- 22: erste Anpressplatte
- 23: zweite Anpressplatte
- 24: erste Reibscheibe
- 25: zweite Reibscheibe
- 26: äußerer Kolben
- 27: innerer Kolben
- 28: Kraftfahrzeug
- 29: Antriebseinheit
- 30: erste Ausgangswelle
- 31: zweite Ausgangswelle
- 32: Fahrerkabine
- 33: Längsachse
- 34: Motorachse
- 35: innere Kolbenlänge
- 36: konventioneller zentraler Doppelbetätigungszylinder
- 37: erste Reibpaketlagerung
- 38: zweite Reibpaketlagerung
- 39: erste Kolbendichtung
- 40: zweite Kolbendichtung
- 41: Zentralsteg
- 42: Kupplungsdeckel
- 43: erste Betätigungseinrichtung
- 44: zweite Betätigungseinrichtung
- 45: Versorgungsleitung
- 46: Klammer
- 47: Spiel
- 48: Lagerflansch

## Patentansprüche

1. Versteifungshülse (1) für einen zentralen Doppelbetätigungszylinder (2) einer Doppelkupplung (3), aufweisend zumindest die folgenden Komponenten:
- einen Versteifungsmantel (4) für einen zentralen Doppelbetätigungszylinder (2), wobei der Doppelbetätigungszylinder (2) eine außenliegende Druckkammer (5), eine innenliegende Druckkammer (6) und eine Kolbenöffnungsseite (7) umfasst; und
- einen Positionierrand (8), der dazu eingerichtet ist, im montierten Zustand eine vorbestimmte Solllage (9) der Versteifungshülse (1) relativ zum Doppelbetätigungszylinder (2) sicherzustellen,
wobei der aufgeführte Versteifungsmantel (4) dazu eingerichtet ist, eine außenliegende Druckkammer (5) eines Doppelbetätigungszylinders (2) umfänglich und radial nach außen zu stützen.

2. Versteifungshülse (1) nach Anspruch 1, wobei die Versteifungshülse (1) von der Kolbenöffnungsseite (7) auf den Doppelbetätigungszylinder (2) aufführbar ist.

3. Versteifungshülse (1) nach Anspruch 1 oder 2, wobei der Versteifungsmantel (4) eine Mantellänge (10) aufweist, die mindestens einer Kammerlänge (11) der außenliegenden Druckkammer (5) entspricht.

4. Versteifungshülse (1) nach einem der vorhergehenden Ansprüche, wobei eine elastische Verbindungseinrichtung (12) vorgesehen ist, welche die montierte Versteifungshülse (1) in der Solllage (9) arretiert.

5. Versteifungshülse (1) nach einem der vorhergehenden Ansprüche, wobei der Versteifungsmantel (4) eine Außenoberfläche (13) aufweist, die zur Aufnahme einer rotatorischen Lagerung (14) eingerichtet ist.

6. Doppelbetätigungszylinder (2) für eine Doppelkupplung (3), aufweisend zumindest die folgenden Komponenten:
- eine außenliegende Druckkammer (5) und eine innenliegende Druckkammer (6) mit jeweils einer Kolbenöffnung (15,16);
- eine Versteifungshülse (1) nach einem der vorhergehenden Ansprüche,
wobei zumindest die Druckkammern (5,6) aus einem Kunststoff gefertigt sind und die aufgeführte Versteifungshülse (1) die Steifigkeit der Druckkammern (5,6) umfänglich und radial nach außen zumindest mittelbar erhöht.

7. Doppelkupplung (3) mit einer Rotationsachse (17) zum lösbaren Verbinden einer Abtriebswelle (18) mit einem Antriebsstrang (19), aufweisend zumindest die folgenden Komponenten:
- zwei Reibpakete (20,21), aufweisend jeweils eine Anpressplatte (22,23) und zumindest eine korrespondierenden Reibscheibe (24,25), über die im angepressten Zustand ein Drehmoment übertragbar ist;
- einen Doppelbetätigungszylinder (2) mit einem äußeren Kolben (26) in der außenliegenden Druckkammer (5) und einem inneren Kolben (27) in der innenliegenden Druckkammer (6), und mit einer Versteifungshülse (1) nach einem der Ansprüche 1 bis 5, wobei der Doppelbetätigungszylinder (2) dazu eingerichtet ist, mit dem äußeren Kolben (26) der außenliegenden Druckkammer (5) ein erstes Reibpaket (20) zu betätigen und mit dem inneren Kolben (27) der innenliegenden Druckkammer (6) ein zweites Reibpaket (21) zu betätigen.

8. Kraftfahrzeug (28) aufweisend eine Antriebseinheit (29) mit einer Abtriebswelle (30), einen Antriebsstrang (31) und eine Doppelkupplung (3) nach Anspruch 7.

## Claims

1. Reinforcing sleeve (1) for a central double actuating cylinder (2) of a double clutch (3), having at least the following components:
- a reinforcing shell (4) for a central double actuating cylinder (2), the double actuating cylinder (2) comprising an outer pressure chamber (5), an inner pressure chamber (6) and a piston opening side (7); and
- a positioning edge (8) which is set up to ensure a predefined setpoint position (9) of the reinforcing sleeve (1) relative to the double actuating cylinder (2) in the mounted state,
the fitted reinforcing sleeve (4) being set up to support an outer pressure chamber (5) of a double actuating cylinder (2) circumferentially and radially to the outside,

2. Reinforcing sleeve (1) according to Claim 1, it being possible for the reinforcing sleeve (1) to be fitted onto the double actuating cylinder (2) from the piston opening side (7).

3. Reinforcing sleeve (1) according to Claim 1 or 2, the reinforcing shell (4) having a shell length (10) which corresponds to at least chamber length (11) of the outer pressure chamber (5).

4. Reinforcing sleeve (1) according to one of the preceding claims, an elastic connecting device (12) being provided which locks the mounted reinforcing sleeve (1) in the setpoint position (9).

5. Reinforcing sleeve (1) according to one of the preceding claims, the reinforcing shell (4) having an outer surface (13) which is set up to receive a rotational bearing (14).

6. Double actuating cylinder (2) for a double clutch (3), having at least the following components:
- an outer pressure chamber (5) and an inner pressure chamber (6) with in each case one piston opening (15, 16);
- a reinforcing sleeve (1) according to one of the preceding claims,
at least the pressure chambers (5, 6) being manufactured from a plastic, and the fitted reinforcing sleeve (1) at least indirectly increasing the rigidity of the pressure chambers (5, 6) circumferentially and radially to the outside.

7. Double clutch (3) having a rotational axis (17) for releasably connecting an output shaft (18) to a drive train (19), having at least the following components:
- two friction assemblies (20, 21), having in each case one pressure plate (22, 23) and at least one corresponding friction disc (24, 25), via which a torque can be transmitted in the pressed-on state;
- a double actuating cylinder (2) with an outer piston (26) in the outer pressure chamber (5) and an inner piston (27) in the inner pressure chamber (6), and with a reinforcing sleeve (1) according to one of Claims 1 to 5, the double actuating cylinder (2) being set up to actuate a first friction assembly (20) by way of the outer piston (26) of the outer pressure chamber (5) and to actuate a second friction assembly (21) by way of the inner piston (27) of the inner pressure chamber (6).

8. Motor vehicle (28) having a drive unit (29) with an output shaft (30), a drive train (31) and a double clutch (3) according to Claim 7,

## Revendications

1. Manchon de renfort (1) pour un cylindre de commande double central (2) d'un embrayage double (3), présentant au moins les composants suivants:
- une enveloppe de renforcement (4) pour un cylindre de commande double central (2), dans lequel le cylindre de commande double (2) comprend une chambre de pression externe (5), une chambre de pression interne (6) et un côté d'ouverture de piston (7); et
- un bord de positionnement (8), qui est conçu pour assurer, dans l'état monté, une position de consigne prédéterminée (9) du manchon de renforcement (1) par rapport au cylindre de commande double (2),
dans lequel l'enveloppe de renforcement précitée (4) est conçue pour soutenir en périphérie et radialement vers l'extérieur une chambre de pression externe (5) d'un cylindre de commande double (2).

2. Manchon de renforcement (1) selon la revendication 1, dans lequel le manchon de renforcement (1) peut être emmanché sur le cylindre de commande double (2) par le côté d'ouverture de piston (7).

3. Manchon de renforcement (1) selon la revendication 1 ou 2, dans lequel l'enveloppe de renforcement (4) présente une longueur d'enveloppe (10), qui correspond au moins à une longueur de chambre (11) de la chambre de pression externe (5).

4. Manchon de renforcement (1) selon l'une quelconque des revendications précédentes, dans lequel il est prévu un dispositif d'assemblage élastique (12), qui bloque le manchon de renforcement monté (1) dans la position de consigne (9).

5. Manchon de renforcement (1) selon l'une quelconque des revendications précédentes, dans lequel l'enveloppe de renforcement (4) présente une surface extérieure (13), qui est conçue pour recevoir un palier rotatif (14).

6. Cylindre de commande double (2) pour un embrayage double (3), présentant au moins les composants suivants;
- une chambre de pression externe (5) et une chambre de pression interne (6) respectivement avec une ouverture de piston (15, 16);
- un manchon de renforcement (1) selon l'une quelconque des revendications précédentes,
dans lequel au moins les chambres de pression (5, 6) sont fabriquées en une matière plastique et le manchon de renforcement précité (1) augmente au moins indirectement la rigidité des chambres de pression (5, 6) en périphérie et radialement vers l'extérieur.

7. Embrayage double (3) avec un axe de rotation (17) pour la liaison séparable d'un arbre de sortie (18) avec une chaîne cinématique (19), présentant au moins les composants suivants:
- deux ensembles de friction (20, 21), présentant respectivement une plaque de pression (22, 23) et au moins un disque de friction correspondant (24, 25), par lesquels un couple de rotation peut être transmis dans l'état pressé;
- un cylindre de commande double (2) avec un piston extérieur (26) dans la chambre de pression externe (5) et un piston intérieur (27) dans la chambre de pression interne (6), et avec un manchon de renforcement (1) selon l'une quelconque des revendications 1 à 5, dans lequel le cylindre de commande double (2) est conçu pour commander un premier ensemble de friction (20) avec le piston extérieur (26) de la chambre de pression externe (5) et pour commander un deuxième ensemble de friction (21) avec le piston intérieur (27) de la chambre de pression interne (6).

8. Véhicule automobile (28) présentant une unité motrice (29) avec un arbre de sortie (30), une chaîne cinématique (31) et un embrayage double (3) selon la revendication 7.
